# EUROPEAN PATENT APPLICATION

(11) **EP 4 513 352 A1**
(43) Date of publication of application: **26.02.2025**
(21) Application number: 24194301.8
(22) Date of filing: 13.08.2024
(51) Int. Cl.: G06F 16/25, G06Q 50/10, G06Q 30/01, G06Q 30/0601

(54) **METHOD AND APPARATUS FOR QUERYING LOG INFORMATION, DEVICE, AND STORAGE MEDIUM**

(30) Priority: 25.08.2023 CN 202311084826
(71) Applicant: Beijing Volcano Engine Technology Co., Ltd., Beijing 100190 (CN)
(72) Inventor: CAI, Shu, Beijing, 100190 (CN)
(74) Representative: Dentons UK and Middle East LLP

(57) **Abstract**

Embodiments of the present disclosure provide a method for querying log information and a device, which includes: in response to receiving a log query request directed to a plurality of log storage clusters, acquiring a log identifier corresponding to the log query request, in which each of the log storage clusters includes a plurality of storage partitions, each of the storage partitions stores multiple pieces of log information; determining log addressing information corresponding to the log identifier, in which the log addressing information includes a storage cluster identifier, location information of the storage partition to which the corresponding piece of log information belongs, a number of the pieces of log information, location information of the corresponding piece of log information in the corresponding storage partition; querying the corresponding piece of log information corresponding to the log query request from the log storage clusters according to the log addressing information.

## Description

### CROSS-REFERENCE TO RELATED APPLICATION

The present application claims the priority of the Chinese Patent Application No. 202311084826.6 filed on August 25, 2023, which is incorporated herein by reference as part of the disclosure of the present application.

### TECHNICAL FIELD

Embodiments of the present disclosure relate to the field of internet technology, and in particular, to a method for querying log information, an apparatus for querying log information, a device and a storage medium.

### BACKGROUND

With the development of internet technology, more and more users watch videos, purchase items, and the like through the internet platform. Currently, the user's order information may be recorded to obtain log information and stored in a database. Thus, the user can retrieve log information from the database to obtain the real-time status of the order.

In the prior art, multiple pieces of log information can be retrieved from a database by means of keyword. Specifically, each of the pieces of log information in the database is matched according to the keyword, and the log information including the keyword is taken as a search result.

However, the inventors have found that the prior art has at least the following technical problem: when the number of the multiple pieces of log information stored in the database is large, it takes a long time to match each pieces of the log information according to the keyword, which results in a lower inquiry efficiency of the log information.

### SUMMARY

Embodiments of the present disclosure provide a method for querying log information, an apparatus for querying log information, a device and a storage medium, and the method for querying log information can improve query efficiency of the log information.

In a first aspect, at least one embodiment of the present disclosure provides a method for querying log information, which comprises:
in response to receiving a log query request directed to a plurality of log storage clusters, acquiring a log identifier corresponding to the log query request, in which each of the plurality of log storage clusters comprises a plurality of storage partitions, each of the plurality of storage partitions stores multiple pieces of log information;
determining log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
querying the corresponding piece of log information corresponding to the log query request from the plurality of log storage clusters according to the log addressing information.

In a second aspect, at least one embodiment of the present disclosure provides an apparatus for querying log information, and the apparatus comprises:
an acquiring module, configured to, in response to receiving a log query request directed to a plurality of log storage clusters, acquire a log identifier corresponding to the log query request, in which each of the plurality of log storage clusters comprises a plurality of storage partitions, each of the plurality of storage partitions stores multiple pieces of log information;
a determining module, configured to determine log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
a querying module, configured to query the corresponding piece of log information corresponding to the log query request from the plurality of log storage clusters according to the log addressing information.

In a third aspect, at least one embodiment of the present disclosure provides an electronic device, and the electronic device comprises:
a processor, and a memory communicatively connected with the processor;
the memory stores computer-executable instructions;
the processor executes the computer-executable instructions stored in the memory to implement the method for querying log information as mentioned above in the first aspect.

In a fourth aspect, at least one embodiment of the present disclosure provides a computer-readable storage medium, the computer-readable storage medium stores computer-executable instructions, when the processor executes the computer-executable instructions, the method for querying log information as mentioned above in the first aspect is implemented.

In a fifth aspect, at least one embodiment of the present disclosure provides a computer program product, which comprises a computer program, in which, when the computer program is executed by the processor, the method for querying log information as mentioned above in the first aspect is implemented.

The embodiments of the present disclosure provide a method for querying log information, an apparatus for querying log information, a device and a storage medium, the method comprises: in response to receiving a log query request directed to a plurality of log storage clusters, acquiring a log identifier corresponding to the log query request, in which each of the plurality of log storage clusters comprises a plurality of storage partitions, each of the plurality of storage partitions stores multiple pieces of log information; determining log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions; querying the corresponding piece of log information corresponding to the log query request from the plurality of log storage clusters according to the log addressing information. In the embodiments of the present application, when querying log information, the log addressing information corresponding to the log identifier is obtained firstly, and then the corresponding log information is directly acquired from the log storage clusters by addressing four elements (that is the storage cluster identifier of one of the plurality of log storage clusters to which a corresponding piece of log information belongs, the location information of one of the plurality of storage partitions to which the corresponding piece of log information belongs in the one of the plurality of log storage clusters, the number of the multiple pieces of log information included in the one of the plurality of storage partitions to which the corresponding piece of log information belongs, the location information of the corresponding piece of log information in the one of the plurality of storage partitions) in the log addressing information, therefore, the retrieval efficiency is improved.

### BRIEF DESCRIPTION OF DRAWINGS

To describe the technical solutions in the embodiments of the present disclosure or in the prior art more clearly, the accompanying drawings required in the description of the embodiments or the prior art will be described briefly below. Apparently, the accompanying drawings in the following description are some embodiments disclosed herein, other accompanying drawings can also be derived from these drawings by those ordinarily skilled in the art without creative efforts.
Fig. 1 is a schematic diagram of an application scenario of a method for querying log information provided by at least one embodiment of the present disclosure;
Fig. 2 is a flowchart of a method for querying log information provided by at least one embodiment of the present disclosure;
Fig. 3 shows a composition diagram of log addressing information provided by at least one embodiment of the present disclosure;
Fig. 4 is a flowchart of another method for querying log information provided by at least one embodiment of the present disclosure;
Fig. 5 shows a composition diagram of a log storage cluster provided by at least one embodiment of the present disclosure;
Fig. 6 is a structural block diagram of an apparatus for querying log information provided by at least one embodiment of the present disclosure; and
Fig. 7 is a schematic diagram of a hardware structure of an electronic device provided by at least one embodiment of the present disclosure.

### DETAILED DESCRIPTION

To make the objects, technical solutions and advantages of the embodiments of the present disclosure clearer, the technical solutions in the embodiments of the present disclosure will be clearly and completely described below in conjunction with the accompanying drawings in the embodiments of the present disclosure, it is obvious that the described embodiments are part of the embodiments of the present disclosure, rather than all of the embodiments. Based on the embodiments in the present disclosure, all other embodiments obtained by those of ordinary skill in the art without making inventive labor belong to the scope of protection of the present disclosure.

It should be noted that, the user information (including, but not limited to, user device information, user personal information, etc.) and data (including, but not limited to, data for analysis, stored data, presented data, etc.) referred to herein are information and data authorized by the user or fully authorized by various parties, and the collection, use, and processing of the relevant data must comply with relevant laws and standards, and corresponding operation entrances are provided for users to choose whether to authorize or refuse.

With the development of internet technology, more and more users watch videos, purchase items, and the like through the internet platform. Currently, the user's order information may be recorded to obtain log information and stored in a database. Thus, the user can retrieve log information from the database to obtain the real-time status of the order.

In the prior art, log information can be retrieved from a database by means of keyword. Specifically, each of the pieces of log information in the database is matched according to the keyword, and the log information including the keyword is taken as a search result. However, when the number of the multiple pieces of log information stored in the database is large, it takes longer time to match each of the pieces of log information according to the keyword, which results in lower efficiency of querying the log information.

As such, how to improve the efficiency of querying the log information is currently an urgent technical problem to be solved.

In order to solve the above problem, the present embodiment provides the following technical concepts: firstly, in response to receiving a log query request directed to a plurality of log storage clusters, acquiring a log identifier corresponding to the log query request; then, determining log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions; finally, querying the corresponding piece of log information corresponding to the log query request from the plurality of log storage clusters according to the log addressing information. Due to the fact that when querying log information, the corresponding log information is directly acquired from the log storage clusters by addressing four elements (that is the storage cluster identifier of one of the plurality of log storage clusters to which a corresponding piece of log information belongs, the location information of one of the plurality of storage partitions to which the corresponding piece of log information belongs in the one of the plurality of log storage clusters, the number of the multiple pieces of log information included in the one of the plurality of storage partitions to which the corresponding piece of log information belongs, the location information of the corresponding piece of log information in the one of the plurality of storage partitions) in the log addressing information, therefore, the retrieval efficiency is improved.

Application scenarios of the embodiments of the present disclosure are explained as follows.

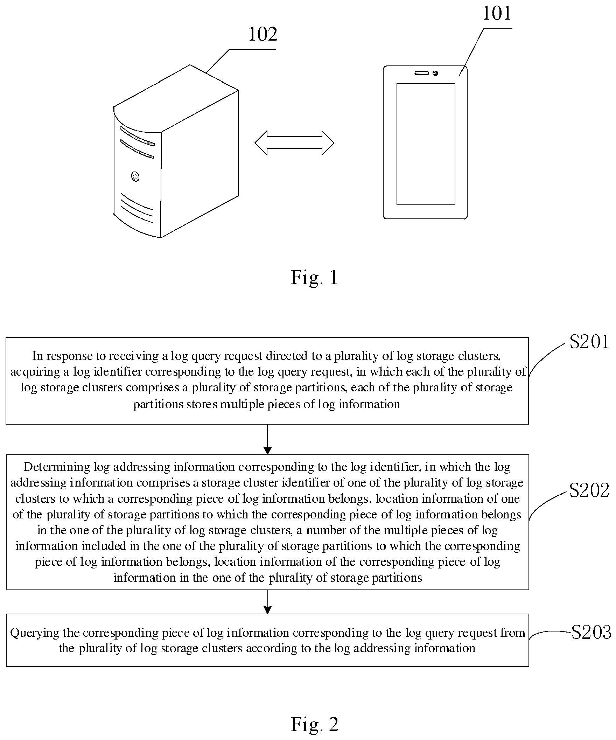

The method for querying log information provided by the embodiments of the present disclosure may be applied in a scenario of querying any one of the pieces of the log information. Fig. 1 is a schematic diagram of an application scenario of a method for querying log information provided by at least one embodiment of the present disclosure. As shown in Fig. 1, a server 102 can be wire-communicate or wireless-communicate with a terminal 101. The terminal 101 sends a log query request of log information to the server 102; the log query request carries a log identifier corresponding to the log information to be retrieved. By the query method in the embodiment of the present disclosure, the server 102 responses to receiving a log query request, acquires the log information corresponding to the log query request from the plurality of log storage clusters, and feeds back the acquired log information to the terminal 101. The following adopts a detailed embodiment to explain the method for querying log information provided by the embodiment of the present disclosure in detail.

Fig. 2 is a flowchart of a method for querying log information provided by at least one embodiment of the present disclosure. The performing subject of the present method may be a terminal device, or may be a server device. The embodiment of the present application is explained by taking an example that the performing subject is a server device in the plurality of log storage clusters. As shown in Fig. 2, the method comprises:
S201: in response to receiving a log query request directed to a plurality of log storage clusters, acquiring a log identifier corresponding to the log query request, in which each of the plurality of log storage clusters comprises a plurality of storage partitions, each of the plurality of storage partitions stores multiple pieces of log information.

In some embodiments of the present disclosure, the log information stored in the log storage clusters corresponds to a unique log identifier for distinguishing different pieces of log information. Optionally, the log identifier may be represented by DocID. Optionally, the storage partitions may be represented by Codec.

The user may query the log information through a plurality of query modes. Alternatively, the log information may be queried by a point search mode, a range query mode, a prefix query mode, or a full text word segmentation query mode.

In some embodiments, the log query request comprises target query information and a query mode; correspondingly, the acquiring a log identifier corresponding to the log query request comprises: determining index information matching the query mode, in which the index information comprises a mapping relationship between query information and log identifiers; acquiring the log identifier corresponding to the log query request from the mapping relationship between the query information and the log identifiers according to the target query information.

It should be noted that, for different query modes, the corresponding index information is different. Accordingly, the determining index information matching the query mode is at least one selected from the group consisting of: determining the index information matching a point search mode as a mapping relationship between field information and the log identifiers if the query mode is the point search mode; determining the index information matching a range query mode as a mapping relationship between numerical range information and the log identifiers if the query mode is the range query mode; determining the index information matching a prefix query mode as a mapping relationship between prefix information and the log identifiers if the query mode is the prefix query mode; and determining the index information matching a full text word segmentation query mode as a mapping relationship between word segmentation information and the log identifiers if the query mode is the full text word segmentation query mode.

Optionally, if the query mode is the point search mode, the target query information includes target field information. Exemplarily, the target field information includes "hello".

Optionally, if the query mode is the range query mode, the target query information includes target numerical range information. Exemplarily, the target numerical range information is: a log identifier < 100.

Optionally, if the query mode is the prefix query mode, the target query information includes target prefix information. Exemplarily, the target prefix information is: "hel".

Optionally, if the query mode is the full text word segmentation query mode, the target query information includes multiple pieces of target word segmentation information. Exemplarily, the multiple pieces of target word segmentation information are: "hello" "world".

It should be noted that, in the full text word segmentation query mode, the intersection of the query result corresponding to each of the pieces of the target word segmentation information can be used as the query result corresponding to the multiple pieces of target word segmentation information.

Correspondingly, the acquiring the log identifier corresponding to the log query request from the mapping relationship between the query information and the log identifiers according to the target query information comprises: determining a log identifier corresponding to each of the pieces of the target word segmentation information from the mapping relationship between the word segmentation information and the log identifiers according to each of the pieces of the target word segmentation information; determining a same log identifier as the log identifier corresponding to the log query request from the log identifiers corresponding to the respective ones of the pieces of the target word segmentation information.

S202: determining log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions.

In an embodiment of the present disclosure, associations between the log identifiers and multiple pieces of log addressing information may be stored in the server device. Accordingly, the step is: determining the log addressing information corresponding to the log identifier from stored associations between the log identifiers and multiple pieces of log addressing information based on the log identifier.

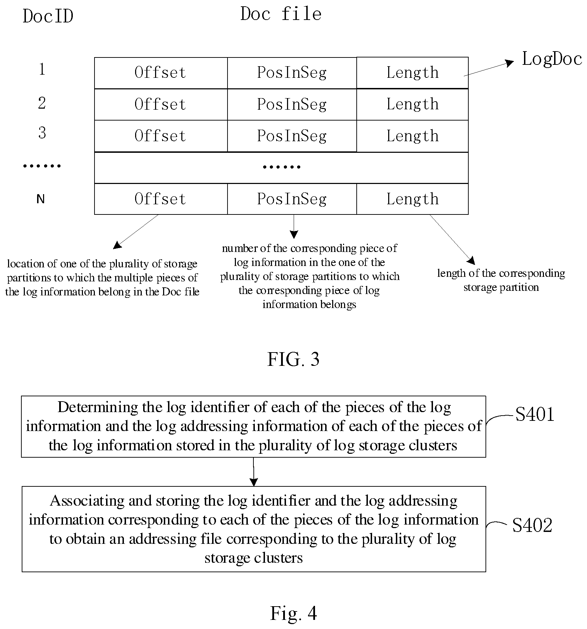

Optionally, as shown in Fig. 3, the storage cluster identifier of one of the plurality of log storage clusters to which a corresponding piece of log information belongs may be represented with a PathID. Each of the log storage clusters can use a Doc file to store the log addressing information corresponding to the log identifiers.

Exemplarily, in the log addressing information, the location information of one of the plurality of storage partitions to which the corresponding piece of log information belongs in the one of the plurality of log storage clusters (that is the location of one of the plurality of storage partitions to which the corresponding piece of log information belongs in the Doc file) may be represented by Offset. The number of the multiple pieces of log information included in the one of the plurality of storage partitions to which the corresponding piece of log information belongs (that is the length of the one of the plurality of storage partitions to which the corresponding piece of log information belongs) may be represented by Length. The location information of the corresponding piece of log information in the one of the plurality of storage partitions (that is the number of the corresponding piece of log information in the one of the plurality of storage partitions to which the corresponding piece of log information belongs) may be represented by PosInSeg.

As shown in Fig. 3, N pieces of log information are stored in each of the log storage clusters, and their corresponding log identifiers DocID include: 1, 2, 3,..., N. Accordingly, the N pieces of log addressing information may be stored in a Doc file that includes the PathID. Each of the log identifiers DocID corresponds to a set of Offset, PosInSeg, and Length.

It should be noted that, continue to refer to Fig. 3, one of the log identifiers corresponds to a set of Offset, PosInSeg, and Length, which may be combined into one piece of storage location information, which may be represented by LogDoc.

S203: querying the corresponding piece of log information corresponding to the log query request from the plurality of log storage clusters according to the log addressing information.

In an embodiment of the present disclosure, the present step may include: querying a target log storage cluster corresponding to the storage cluster identifier of one of the plurality of log storage clusters to which the corresponding piece of log information belongs from the plurality of log storage clusters; based on the location information of the one of the plurality of storage partitions to which the corresponding piece of log information belongs in the one of the plurality of log storage clusters, and the number of the multiple pieces of log information included in the one of the plurality of storage partitions to which the corresponding piece of log information belongs, acquiring the multiple pieces of log information included in the one of the plurality of storage partitions to which the corresponding piece of log information belongs from the target log storage cluster; based on the location information of the corresponding piece of log information in the one of the plurality of storage partitions to which the corresponding piece of log information belongs, acquiring the corresponding piece of log information corresponding to the log query request from the multiple pieces of log information included in the one of the plurality of storage partitions to which the corresponding piece of log information belongs.

Exemplarily, the log storage cluster that the PathID corresponding to is determined, based on the location information of one of the plurality of storage partitions to which the corresponding piece of log information belongs in the one of the plurality of log storage clusters (that is Offset), a number of the multiple pieces of log information included in the one of the plurality of storage partitions to which the corresponding piece of log information belongs (that is Length), acquiring the multiple pieces of log information (logl, log2,..., logN) included in the one of the plurality of storage partitions (Codec) to which the corresponding piece of log information belongs; finally, based on the location information of the corresponding piece of log information in the one of the plurality of storage partitions (that is PosInSeg), querying the corresponding piece of log information corresponding to the log query request from the multiple pieces of log information (logl, log2,..., logN).

In the method for querying log information provided by the embodiment of the present disclosure, due to the fact that when querying log information, the log addressing information corresponding to the log identifier is acquired firstly, then the corresponding log information is directly acquired from the log storage clusters by addressing four elements (that is the storage cluster identifier of one of the plurality of log storage clusters to which a corresponding piece of log information belongs, the location information of one of the plurality of storage partitions to which the corresponding piece of log information belongs in the one of the plurality of log storage clusters, the number of the multiple pieces of log information included in the one of the plurality of storage partitions to which the corresponding piece of log information belongs, the location information of the corresponding piece of log information in the one of the plurality of storage partitions) in the log addressing information, therefore, the retrieval efficiency is improved.

Fig. 4 is a flowchart of another method for querying log information provided by at least one embodiment of the present disclosure. On the basis of the embodiment shown in Fig. 2, before in response to receiving the log query request directed to the plurality of log storage clusters at step S201, it is also possible to address the multiple pieces of log information to facilitate querying and recalling the multiple pieces of log information. As shown in Fig. 4, the method of addressing the multiple pieces of log information comprises:
S401: determining the log identifier of each of the pieces of the log information and the log addressing information of each of the pieces of the log information stored in the plurality of log storage clusters.

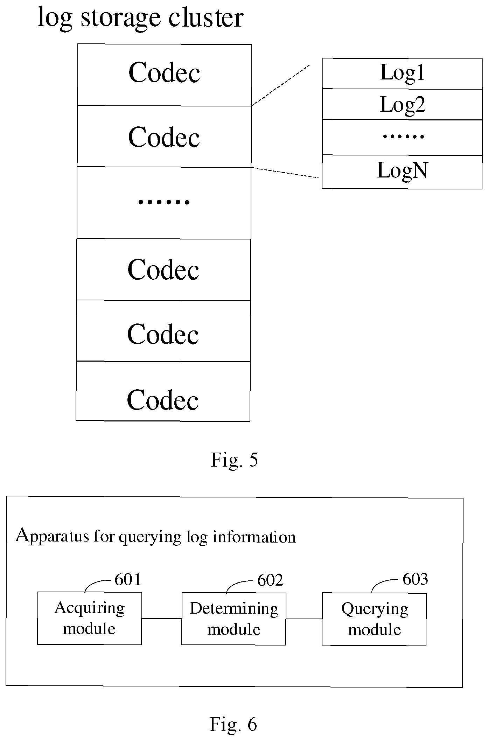

In an embodiment of the present disclosure, as shown in Fig. 5, each of the log storage clusters comprises a plurality of storage partitions (Codec), each of the storage partitions comprises multiple pieces of log information. Alternatively, the log identifiers corresponding to each of the pieces of the log information may be determined according to the storage time order of the multiple pieces of log information. Exemplarily, the storage partition (Codec) comprises multiple pieces of log information (log₁, log₂,..., log_{N}), the log identifiers DocID corresponding to the multiple pieces of log information (logl, log2,..., logN) are determined according to the storage time order of: 1, 2, 3,..., N, where N is a positive integer.

Optionally, determining the log addressing information corresponding to each of the pieces of the log information includes: determining location information PosInSeg (that is the number of the corresponding piece of log information in the one of the plurality of storage partitions to which the corresponding piece of log information belongs) of each of the pieces of the log information in the corresponding storage partition, and determining the number of the multiple pieces of log information that the storage partition to which each of the log information belongs includes (that is the length of the corresponding storage partition), and determining the location information Offset of the storage partitions to which each of the pieces of log information belongs in the log storage clusters (that is the location of one of the plurality of storage partitions to which the multiple pieces of the log information belong in the Doc file).

In an embodiment of the present disclosure, the log storage clusters may store the log identifiers DocID with 35-byte data, may store the file names PathId of the Doc file with 16-byte data, and may store the time stamps of the log information with 12-byte data. As such, the log storage clusters may support hundreds of PB (1PB equals 1024TB) of log writes per day, as well as second level timestamps for the logs.

S402: associating and storing the log identifier and the log addressing information corresponding to each of the pieces of the log information to obtain an addressing file corresponding to the plurality of log storage clusters.

The addressing file may be represented by a Doc file.

It should be noted that, the log information corresponding to the same business can be stored in a same log storage cluster, and the corresponding log storage cluster can be determined by the business identifier. Correspondingly, the storage cluster identifier includes the business identifier.

In an embodiment of the present disclosure, it is also possible to query the log information corresponding to different log identifiers firstly, and then analyze the log information corresponding to the different log identifiers. Optionally, the business identifier is request status log information. The step of analyzing the log information comprises: acquiring multiple pieces of first log information corresponding to a first log identifier and multiple pieces of second log information corresponding to a second log identifier from one of the plurality of log storage clusters corresponding to the request status log information, determining a proportion of the multiple pieces of first log information and the multiple pieces of second log information, in which the first log identifier corresponds to log information with normal request status, and the second log identifier corresponds to log information with abnormal request status.

Exemplarily, the first log identifier corresponds to the log information of "200OK", the second log identifier corresponds to the log information of "404 not found". The quantity of the obtained multiple pieces of first log information through the first log identifier is 1000; the quantity of the obtained multiple pieces of second log information through the second log identifier is 10, then the ratio of the multiple pieces of first log information to the multiple pieces of second log information is determined to be 100/1.

In the embodiment of the present disclosure, due to the fact that, before in response to receiving the log query request, the log information can be addressed to obtain the addressing file corresponding to the log storage clusters, so that the log addressing information can be obtained through the addressing file, and then the corresponding log information can be obtained from the log storage clusters through the log addressing information, thus the retrieval efficiency is improved.

Fig. 6 is a structural block diagram of an apparatus for querying log information provided by at least one embodiment of the present disclosure, the apparatus for querying log information includes an acquiring module 601, a determining module 602 and a querying module 603.

The acquiring module 601, is configured to, in response to receiving a log query request directed to a plurality of log storage clusters, acquire a log identifier corresponding to the log query request, in which each of the plurality of log storage clusters comprises a plurality of storage partitions, each of the plurality of storage partitions stores multiple pieces of log information.

The determining module 602, is configured to determine log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions.

The querying module 603, is configured to query the corresponding piece of log information corresponding to the log query request from the plurality of log storage clusters according to the log addressing information.

According to one or more embodiments of the present disclosure, the log query request comprises target query information and a query mode; correspondingly, the acquiring module 601 is configured to acquire a log identifier corresponding to the log query request, which comprises: determining index information matching the query mode, in which the index information comprises a mapping relationship between query information and log identifiers; acquiring the log identifier corresponding to the log query request from the mapping relationship between the query information and the log identifiers according to the target query information.

According to one or more embodiments of the present disclosure, the acquiring module 601, is configured to determine the index information matching the query mode, which specifically is at least one selected from the group consisting of:: determining the index information matching a point search mode as a mapping relationship between field information and the log identifiers if the query mode is the point search mode; determining the index information matching a range query mode as a mapping relationship between numerical range information and the log identifiers if the query mode is the range query mode; determining the index information matching a prefix query mode as a mapping relationship between prefix information and the log identifiers if the query mode is the prefix query mode; and determining the index information matching a full text word segmentation query mode as a mapping relationship between word segmentation information and the log identifiers if the query mode is the full text word segmentation query mode.

According to one or more embodiments of the present disclosure, the target query information is at least one selected from the group consisting of target field information, target numerical range information, target prefix information, and multiple pieces of target word segmentation information.

According to one or more embodiments of the present disclosure, the target query information comprises the multiple pieces of target word segmentation information. Correspondingly, the acquiring module 601 is configured to acquire the log identifier corresponding to the log query request from the mapping relationship between the query information and the log identifiers according to the target query information, which specifically comprises: determining a log identifier corresponding to each of the pieces of the target word segmentation information from the mapping relationship between the word segmentation information and the log identifiers according to each of the pieces of the target word segmentation information; determining a same log identifier as the log identifier corresponding to the log query request from the log identifiers corresponding to the respective ones of the pieces of the target word segmentation information.

According to one or more embodiments of the present disclosure, the determining module 602 is configured to determine log addressing information corresponding to the log identifier, which specifically includes: determining the log addressing information corresponding to the log identifier from stored associations between the log identifiers and multiple pieces of log addressing information based on the log identifier.

According to one or more embodiments of the present disclosure, the querying module 603 is configured to query the corresponding piece of log information corresponding to the log query request from the plurality of log storage clusters according to the log addressing information, which specifically comprises: querying a target log storage cluster corresponding to the storage cluster identifier of one of the plurality of log storage clusters to which the corresponding piece of log information belongs from the plurality of log storage clusters; based on the location information of the one of the plurality of storage partitions to which the corresponding piece of log information belongs in the one of the plurality of log storage clusters, the number of the multiple pieces of log information included in the one of the plurality of storage partitions to which the corresponding piece of log information belongs, acquiring the multiple pieces of log information included in the one of the plurality of storage partitions to which the corresponding piece of log information belongs from the target log storage cluster; based on the location information of the corresponding piece of log information in the one of the plurality of storage partitions to which the corresponding piece of log information belongs, acquiring the corresponding piece of log information corresponding to the log query request from the multiple pieces of log information included in the one of the plurality of storage partitions to which the corresponding piece of log information belongs.

According to one or more embodiments of the present disclosure, the apparatus further comprises: an addressing module. The addressing module is configured to determine the log identifier of each of the pieces of the log information and the log addressing information of each of the pieces of the log information stored in the plurality of log storage clusters; and associate and store the log identifier and the log addressing information corresponding to each of the pieces of the log information to obtain an addressing file corresponding to the plurality of log storage clusters.

According to one or more embodiments of the present disclosure, the storage cluster identifier comprises a business identifier.

According to one or more embodiments of the present disclosure, the business identifier is request status log information. The apparatus further comprises: an analysis module. The analysis module is configured to acquire multiple pieces of first log information corresponding to a first log identifier and multiple pieces of second log information corresponding to a second log identifier from one of the plurality of log storage clusters corresponding to the request status log information, and determine a proportion of the multiple pieces of first log information and the multiple pieces of second log information, in which the first log identifier corresponds to log information with normal request status, and the second log identifier corresponds to log information with abnormal request status.

The acquiring module 601, the determining module 602 and the querying module 603 are connected in sequence. The apparatus for querying log information provided by the embodiment of the present disclosure can perform the technical solutions of the above method embodiments, its implementation principles and technical effects are similar, and the present embodiment will not be described in detail herein.

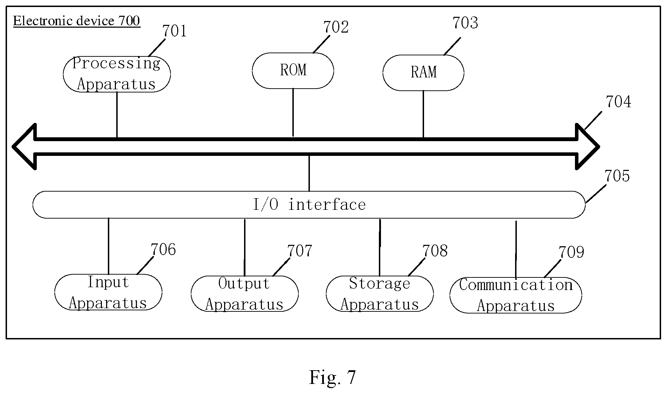

Fig. 7 is a schematic diagram of a hardware structure of an electronic device provided by at least one embodiment of the present disclosure. Referring to Fig. 7, the electronic device 700 may be a terminal device or a server. Among them, the terminal device may include, but is not limited to a mobile terminal such as a mobile phone, a notebook computer, a digital broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic device shown in Fig. 7 is only an example and should not impose any limitations on the functions and use scopes of the embodiments of the present disclosure.

As shown in Fig. 7, the electronic device 700 may include a processing apparatus (such as a central processing unit, and a graphics processor) 701, it may execute various appropriate actions and processes according to a program stored in a read-only memory (ROM) 702 or a program loaded from a storage apparatus 708 to a random access memory (RAM) 703. In RAM 703, various programs and data required for operations of the electronic device 700 are also stored. The processing apparatus 701, ROM 702, and RAM 703 are connected to each other by a bus 704. An input/output (I/O) interface 705 is also connected to the bus 704.

Typically, the following apparatuses may be connected to the I/O interface 705: an input apparatus 706 such as a touch screen, a touchpad, a keyboard, a mouse, a camera, a microphone, an accelerometer, and a gyroscope; an output apparatus 707 such as a liquid crystal display (LCD), a loudspeaker, and a vibrator; a storage apparatus708 such as a magnetic tape, and a hard disk drive; and a communication apparatus 709. The communication apparatus 709 may allow the electronic device 700 to wireless-communicate or wire-communicate with other devices so as to exchange data. Although Fig. 7 shows the electronic device 700 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a computer-readable medium, and the computer program contains a program code for executing the method shown in the flow diagram. In such an embodiment, the computer program may be downloaded and installed from the network by the communication apparatus 709, or installed from the storage apparatus 708, or installed from ROM 702. When the computer program is executed by the processing apparatus 701, the above functions defined in the sight line tracking method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

The above-mentioned computer-readable medium may be included in the above-mentioned electronic device, it may also be presented separately and not incorporated into the electronic device.

The above-mentioned computer-readable medium carries one or more programs, when the one or more programs are executed by the electronic device, the electronic device can perform the methods shown in the above-mentioned embodiments.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including Local Area Network (short for LAN) or Wide Area Network (short for WAN), or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

In a first aspect, according to one or more embodiments of the present disclosure, a method for querying log information is provided, and the method comprises:
in response to receiving a log query request directed to a plurality of log storage clusters, acquiring a log identifier corresponding to the log query request, in which each of the plurality of log storage clusters comprises a plurality of storage partitions, each of the plurality of storage partitions stores multiple pieces of log information;
determining log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
querying the corresponding piece of log information corresponding to the log query request from the plurality of log storage clusters according to the log addressing information.

According to one or more embodiments of the present disclosure, the log query request comprises target query information and a query mode; accordingly, the acquiring a log identifier corresponding to the log query request comprises: determining index information matching the query mode, in which the index information comprises a mapping relationship between query information and log identifiers; acquiring the log identifier corresponding to the log query request from the mapping relationship between the query information and the log identifiers according to the target query information.

According to one or more embodiments of the present disclosure, the determining index information matching the query mode is at least one selected from the group consisting of: determining the index information matching a point search mode as a mapping relationship between field information and the log identifiers if the query mode is the point search mode; determining the index information matching a range query mode as a mapping relationship between numerical range information and the log identifiers if the query mode is the range query mode; determining the index information matching a prefix query mode as a mapping relationship between prefix information and the log identifiers if the query mode is the prefix query mode; and determining the index information matching a full text word segmentation query mode as a mapping relationship between word segmentation information and the log identifiers if the query mode is the full text word segmentation query mode.

According to one or more embodiments of the present disclosure, the target query information is at least one selected from the group consisting of target field information, target numerical range information, target prefix information, and multiple pieces of target word segmentation information.

According to one or more embodiments of the present disclosure, the target query information comprises the multiple pieces of target word segmentation information; the acquiring the log identifier corresponding to the log query request from the mapping relationship between the query information and the log identifiers according to the target query information comprises: determining a log identifier corresponding to each of the pieces of the target word segmentation information from the mapping relationship between the word segmentation information and the log identifiers according to each of the pieces of the target word segmentation information; determining a same log identifier as the log identifier corresponding to the log query request from the log identifiers corresponding to the respective ones of the pieces of the target word segmentation information.

According to one or more embodiments of the present disclosure, the determining log addressing information corresponding to the log identifier comprises: determining the log addressing information corresponding to the log identifier from stored associations between the log identifiers and multiple pieces of log addressing information based on the log identifier.

According to one or more embodiments of the present disclosure, the querying the corresponding piece of log information corresponding to the log query request from the plurality of log storage clusters according to the log addressing information comprises: querying a target log storage cluster corresponding to the storage cluster identifier of one of the plurality of log storage clusters to which the corresponding piece of log information belongs from the plurality of log storage clusters; based on the location information of the one of the plurality of storage partitions to which the corresponding piece of log information belongs in the one of the plurality of log storage clusters, the number of the multiple pieces of log information included in the one of the plurality of storage partitions to which the corresponding piece of log information belongs, acquiring the multiple pieces of log information included in the one of the plurality of storage partitions to which the corresponding piece of log information belongs from the target log storage cluster; based on the location information of the corresponding piece of log information in the one of the plurality of storage partitions to which the corresponding piece of log information belongs, acquiring the corresponding piece of log information corresponding to the log query request from the multiple pieces of log information included in the one of the plurality of storage partitions to which the corresponding piece of log information belongs.

According to one or more embodiments of the present disclosure, before acquiring the log identifier corresponding to the log query request in response to receiving the log query request directed to the plurality of log storage clusters, the method further comprises: determining the log identifier of each of the pieces of the log information and the log addressing information of each of the pieces of the log information stored in the plurality of log storage clusters; and associating and storing the log identifier and the log addressing information corresponding to each of the pieces of the log information to obtain an addressing file corresponding to the plurality of log storage clusters.

According to one or more embodiments of the present disclosure, the storage cluster identifier comprises a business identifier.

According to one or more embodiments of the present disclosure, the business identifier is request status log information, and the method further comprises:
acquiring multiple pieces of first log information corresponding to a first log identifier and multiple pieces of second log information corresponding to a second log identifier from one of the plurality of log storage clusters corresponding to the request status log information, determining a proportion of the multiple pieces of first log information and the multiple pieces of second log information, in which the first log identifier corresponds to log information with normal request status, and the second log identifier corresponds to log information with abnormal request status.

In a second aspect, according to one or more embodiments of the present disclosure, an apparatus for querying log information is provided, and the apparatus comprises:
an acquiring module, configured to, in response to receiving a log query request directed to a plurality of log storage clusters, acquire a log identifier corresponding to the log query request, in which each of the plurality of log storage clusters comprises a plurality of storage partitions, each of the plurality of storage partitions stores multiple pieces of log information;
a determining module, configured to determine log addressing information corresponding to the log identifier, in which the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
a querying module, configured to query the corresponding piece of log information corresponding to the log query request from the plurality of log storage clusters according to the log addressing information.

According to one or more embodiments of the present disclosure, the log query request comprises target query information and a query mode; correspondingly, the acquiring module is configured to acquire a log identifier corresponding to the log query request, which specifically comprises: determining index information matching the query mode, in which the index information comprises a mapping relationship between query information and log identifiers; and acquiring the log identifier corresponding to the log query request from the mapping relationship between the query information and the log identifiers according to the target query information.

According to one or more embodiments of the present disclosure, the acquiring module is configured to determine the index information matching the query mode, which specifically includes at least one selected from the group consisting of: determining the index information matching a point search mode as a mapping relationship between field information and the log identifiers if the query mode is the point search mode; determining the index information matching a range query mode as a mapping relationship between numerical range information and the log identifiers if the query mode is the range query mode; determining the index information matching a prefix query mode as a mapping relationship between prefix information and the log identifiers if the query mode is the prefix query mode; and determining the index information matching a full text word segmentation query mode as a mapping relationship between word segmentation information and the log identifiers if the query mode is the full text word segmentation query mode.

According to one or more embodiments of the present disclosure, the target query information is at least one selected from the group consisting of target field information, target numerical range information, target prefix information, and multiple pieces of target word segmentation information.

According to one or more embodiments of the present disclosure, the target query information comprises the multiple pieces of target word segmentation information. Correspondingly, the acquiring module is configured to acquire the log identifier corresponding to the log query request from the mapping relationship between the query information and the log identifiers according to the target query information, which specifically comprises: determining a log identifier corresponding to each of the pieces of the target word segmentation information from the mapping relationship between the word segmentation information and the log identifiers according to each of the pieces of the target word segmentation information; determining a same log identifier as the log identifier corresponding to the log query request from the log identifiers corresponding to the respective ones of the pieces of the target word segmentation information.

According to one or more embodiments of the present disclosure, the determining module is configured to determine log addressing information corresponding to the log identifier, which specifically includes: determining the log addressing information corresponding to the log identifier from stored associations between the log identifiers and multiple pieces of log addressing information based on the log identifier.

According to one or more embodiments of the present disclosure, the querying module is configured to query the corresponding piece of log information corresponding to the log query request from the plurality of log storage clusters according to the log addressing information, which specifically comprises: querying a target log storage cluster corresponding to the storage cluster identifier of one of the plurality of log storage clusters to which the corresponding piece of log information belongs from the plurality of log storage clusters; based on the location information of the one of the plurality of storage partitions to which the corresponding piece of log information belongs in the one of the plurality of log storage clusters, the number of the multiple pieces of log information included in the one of the plurality of storage partitions to which the corresponding piece of log information belongs, acquiring the multiple pieces of log information included in the one of the plurality of storage partitions to which the corresponding piece of log information belongs from the target log storage cluster; based on the location information of the corresponding piece of log information in the one of the plurality of storage partitions to which the corresponding piece of log information belongs, acquiring the corresponding piece of log information corresponding to the log query request from the multiple pieces of log information included in the one of the plurality of storage partitions to which the corresponding piece of log information belongs.

According to one or more embodiments of the present disclosure, the apparatus further comprises: an addressing module. The addressing module is configured to determine the log identifier of each of the pieces of the log information and the log addressing information of each of the pieces of the log information stored in the plurality of log storage clusters; and associate and store the log identifier and the log addressing information corresponding to each of the pieces of the log information to obtain an addressing file corresponding to the plurality of log storage clusters.

According to one or more embodiments of the disclosure, the storage cluster identifier comprises a business identifier.

According to one or more embodiments of the present disclosure, the business identifier is request status log information. The apparatus further comprises: an analysis module. The analysis module is configured to acquire multiple pieces of first log information corresponding to a first log identifier and multiple pieces of second log information corresponding to a second log identifier from one of the plurality of log storage clusters corresponding to the request status log information, and determine a proportion of the multiple pieces of first log information and the multiple pieces of second log information, in which the first log identifier corresponds to log information with normal request status, and the second log identifier corresponds to log information with abnormal request status.

In a third aspect, according to one or more embodiments of the present disclosure, an electronic device is provided, which comprises: a processor, and a memory communicatively connected with the processor;
the memory stores computer-executable instructions;
the processor executes the computer-executable instructions stored in the memory to implement the method for querying log information according to the first aspect and the various possible designs of the first aspect.

In a fourth aspect, according to one or more embodiments of the present disclosure, a computer-readable storage medium is provided, the computer-readable storage medium stores computer-executable instructions, when the processor executes the computer-executable instructions, the method for querying log information according to the first aspect and various possible designs of the first aspect is implemented.

In a fifth aspect, an embodiment of the present disclosure provides a computer program product, which comprises a computer program, when the computer program is executed by the processor, the method for querying log information according to the first aspect and the various possible designs of the first aspect is implemented.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A method for querying log information, comprising:
in response to receiving a log query request directed to a plurality of log storage clusters, acquiring a log identifier corresponding to the log query request, wherein each of the plurality of log storage clusters comprises a plurality of storage partitions, each of the plurality of storage partitions stores multiple pieces of log information;
determining log addressing information corresponding to the log identifier, wherein the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
querying the corresponding piece of log information corresponding to the log query request from the plurality of log storage clusters according to the log addressing information.

2. The method according to claim 1, wherein the log query request comprises target query information and a query mode;
the acquiring a log identifier corresponding to the log query request comprises:
determining index information matching the query mode, wherein the index information comprises a mapping relationship between query information and log identifiers;
acquiring the log identifier corresponding to the log query request from the mapping relationship between the query information and the log identifiers according to the target query information.

3. The method according to claim 2, wherein the determining index information matching the query mode is at least one selected from the group consisting of:
determining the index information matching a point search mode as a mapping relationship between field information and the log identifiers if the query mode is the point search mode;
determining the index information matching a range query mode as a mapping relationship between numerical range information and the log identifiers if the query mode is the range query mode;
determining the index information matching a prefix query mode as a mapping relationship between prefix information and the log identifiers if the query mode is the prefix query mode; and
determining the index information matching a full text word segmentation query mode as a mapping relationship between word segmentation information and the log identifiers if the query mode is the full text word segmentation query mode.

4. The method according to claim 3, wherein the target query information is at least one selected from the group consisting of target field information, target numerical range information, target prefix information, and multiple pieces of target word segmentation information.

5. The method according to claim 4, wherein the target query information comprises the multiple pieces of target word segmentation information;
the acquiring the log identifier corresponding to the log query request from the mapping relationship between the query information and the log identifiers according to the target query information comprises:
determining a log identifier corresponding to each of the pieces of the target word segmentation information from the mapping relationship between the word segmentation information and the log identifiers according to each of the pieces of the target word segmentation information;
determining a same log identifier as the log identifier corresponding to the log query request from the log identifiers corresponding to the respective ones of the pieces of the target word segmentation information.

6. The method according to claim 1, wherein the determining log addressing information corresponding to the log identifier comprises:
determining the log addressing information corresponding to the log identifier from stored associations between the log identifiers and multiple pieces of log addressing information based on the log identifier.

7. The method according to claim 1, wherein the querying the corresponding piece of log information corresponding to the log query request from the plurality of log storage clusters according to the log addressing information comprises:
querying a target log storage cluster corresponding to the storage cluster identifier of one of the plurality of log storage clusters to which the corresponding piece of log information belongs from the plurality of log storage clusters;
based on the location information of the one of the plurality of storage partitions to which the corresponding piece of log information belongs in the one of the plurality of log storage clusters, the number of the multiple pieces of log information included in the one of the plurality of storage partitions to which the corresponding piece of log information belongs, acquiring the multiple pieces of log information included in the one of the plurality of storage partitions to which the corresponding piece of log information belongs from the target log storage cluster;
based on the location information of the corresponding piece of log information in the one of the plurality of storage partitions to which the corresponding piece of log information belongs, acquiring the corresponding piece of log information corresponding to the log query request from the multiple pieces of log information included in the one of the plurality of storage partitions to which the corresponding piece of log information belongs.

8. The method according to any one of claims 1 to 7, wherein, before acquiring the log identifier corresponding to the log query request in response to receiving the log query request directed to the plurality of log storage clusters, the method further comprises:
determining the log identifier of each of the pieces of the log information and the log addressing information of each of the pieces of the log information stored in the plurality of log storage clusters; and
associating and storing the log identifier and the log addressing information corresponding to each of the pieces of the log information to obtain an addressing file corresponding to the plurality of log storage clusters.

9. The method according to claim 1, wherein the storage cluster identifier is request status log information, and the method further comprises:
acquiring multiple pieces of first log information corresponding to a first log identifier and multiple pieces of second log information corresponding to a second log identifier from one of the plurality of log storage clusters corresponding to the request status log information, determining a proportion of the multiple pieces of first log information and the multiple pieces of second log information, wherein the first log identifier corresponds to log information with normal request status, and the second log identifier corresponds to log information with abnormal request status.

10. An apparatus for querying log information, comprising:
an acquiring module (601), configured to, in response to receiving a log query request directed to a plurality of log storage clusters, acquire a log identifier corresponding to the log query request, wherein each of the plurality of log storage clusters comprises a plurality of storage partitions, each of the plurality of storage partitions stores multiple pieces of log information;
a determining module (602), configured to determine log addressing information corresponding to the log identifier, wherein the log addressing information comprises a storage cluster identifier of one of the plurality of log storage clusters to which a corresponding piece of log information belongs, location information of one of the plurality of storage partitions to which the corresponding piece of log information belongs in the one of the plurality of log storage clusters, a number of the multiple pieces of log information included in the one of the plurality of storage partitions to which the corresponding piece of log information belongs, location information of the corresponding piece of log information in the one of the plurality of storage partitions;
a querying module (603), configured to query the corresponding piece of log information corresponding to the log query request from the plurality of log storage clusters according to the log addressing information.

11. The apparatus according to claim 10, further comprising: an addressing module,
wherein the addressing module is configured to determine the log identifier of each of the pieces of the log information and the log addressing information of each of the pieces of the log information stored in the plurality of log storage clusters; and associate and store the log identifier and the log addressing information corresponding to each of the pieces of the log information to obtain an addressing file corresponding to the plurality of log storage clusters.

12. The apparatus according to claim 10, wherein the storage cluster identifier comprises a business identifier, the business identifier is request status log information, and the apparatus further comprises an analysis module, the analysis module is configured to acquire multiple pieces of first log information corresponding to a first log identifier and multiple pieces of second log information corresponding to a second log identifier from one of the plurality of log storage clusters corresponding to the request status log information, and determine a proportion of the multiple pieces of first log information and the multiple pieces of second log information, wherein the first log identifier corresponds to log information with normal request status, and the second log identifier corresponds to log information with abnormal request status.

13. An electronic device (700), comprising: a processor, and a memory communicatively connected with the processor;
wherein the memory stores computer-executable instructions;
the processor executes the computer-executable instructions stored in the memory to implement the method for querying log information according to any one of claims 1 to 9.

14. A computer-readable storage medium, wherein the computer-readable storage medium stores computer-executable instructions, when the processor executes the computer-executable instructions, the method for querying log information according to any one of claims 1 to 9 is implemented.

15. A computer program product, comprising a computer program, wherein, when the computer program is executed by the processor, the method for querying log information according to any one of claims 1 to 9 is implemented.
